# EUROPEAN PATENT APPLICATION

(11) **EP 4 700 550 A1**
(43) Date of publication of application: **25.02.2026**
(21) Application number: 24883873.2
(22) Date of filing: 21.05.2024
(51) Int. Cl.: G06F 3/04815

(54) **MULTI-WINDOW DISPLAY PROCESSING METHOD, ELECTRONIC DEVICE AND STORAGE MEDIUM**

(30) Priority: 01.11.2023 CN 202311450475
(71) Applicant: Huawei Technologies Co., Ltd., Shenzhen, Guangdong 518129 (CN)
(72) Inventor: ZHOU, Yiyang, Shenzhen, Guangdong 518129 (CN); DONG, Zhichao, Shenzhen, Guangdong 518129 (CN); GONG, Zhe, Shenzhen, Guangdong 518129 (CN); ZHANG, Zhiqi, Shenzhen, Guangdong 518129 (CN)
(74) Representative: Pfenning, Meinig & Partner mbB
(86) International application number: PCT/CN2024/094431
(87) International publication number: WO 2025/091860

(57) **Abstract**

This application relates to the field of window display technologies, and relates to a multi-window display processing method, an electronic device, and a storage medium. In the method, for a plurality of windows synchronously displayed on a display interface of a large-screen electronic device, a part or all of occluded regions of a part or all of occluded windows may be obtained, so that simple drawing can be performed in the occluded region and complex drawing can be performed in an occluding region when drawing is performed in the occluded window on the display interface. This can reduce repeated complex drawing on pixels corresponding to the occluded region, and reduce power consumption of the electronic device based on a feature that drawing of a solid color box consumes less power than drawing of a texture.

## Description

This application claims priority to Chinese Patent Application No. 202311450475.6, filed with the China National Intellectual Property Administration on November 1, 2023, and entitled "MULTI-WINDOW DISPLAY PROCESSING METHOD, ELECTRONIC DEVICE, AND STORAGE MEDIUM", which is incorporated herein by reference in its entirety.

### TECHNICAL FIELD

This application relates to the field of window display technologies, and in particular, to a multi-window display processing method, an electronic device, and a storage medium.

### BACKGROUND

Currently, displaying a plurality of rounded-corner windows (namely, windows with four rounded corners) on a display interface gradually becomes a necessity for large-screen electronic devices (like tablets or foldable dual-screen mobile phones).

In some multi-window display processing methods, layers corresponding to a plurality of rounded-corner windows are first drawn on a display interface, and then the plurality of layers are composited using a hardware compositor. However, a large quantity of rounded-corner windows on the display interface results in heavy compositing pressure of the hardware compositor. Therefore, in some other multi-window display processing methods, a graphics processing unit is used to composite a plurality of layers.

However, when a plurality of rounded-corner windows are displayed on a display interface, some or all regions of some windows may be occluded by some or all regions of other windows. Therefore, when layers corresponding to the plurality of rounded-corner windows are drawn, complex drawing needs to be performed in the occluded regions of the occluded windows on some pixels on the display interface, and complex drawing needs to be performed on the occluding regions of the occluding windows on these pixels. As a result, repeated complex drawing is performed on these pixels, that is, redundant drawing exists in multi-primitive overlapping, increasing power consumption of an electronic device.

### SUMMARY

To resolve a problem that power consumption of an electronic device is increased due to repeated complex drawing on some pixels on a display interface, this application provides a multi-window display processing method, an electronic device, and a storage medium.

According to a first aspect, this application provides a multi-window display processing method, applied to an electronic device. The multi-window display processing method may include: obtaining a to-be drawn window set corresponding to a first display interface, where the to-be drawn window set includes a first to-be drawn window and a second to-be drawn window that partially overlap; obtaining a first region of the first to-be drawn window in the to-be drawn window set, where at least a partial region that is of the second to-be drawn window and that overlaps the first region is a second region; obtaining a first drawing instruction for the second region, where the first drawing instruction is used to draw a first solid color box in the second region; and when drawing on the first display interface, skipping a second drawing instruction and executing the first drawing instruction, where the second drawing instruction includes a native drawing instruction for the second region of the second to-be drawn window.

Based on the foregoing solution, a native drawing instruction for an occluded region is skipped, and a solid color box drawing instruction for the occluded region is executed. In other words, simple drawing is performed in an occluded window. This can reduce repeated complex drawing on pixels corresponding to the occluded region, and reduce power consumption of an electronic device based on a feature that drawing of a solid color box consumes less power than drawing of a texture.

It may be understood that a to-be drawn window in the to-be drawn window set may be a rounded-corner window, the first to-be drawn window may be located above the second to-be drawn window. In other words, the first to-be drawn window may be an occluding window, the second to-be drawn window may be an occluded window, the first region may be an occluding region, and the second region may be an occluded region.

In some optional instances, the first solid color box should not be understood as a hollow box, but should be understood as an entire region. Executing the first drawing instruction may be drawing in the first region by using a same RGB value.

In some optional instances, the technical solution is applicable to window drawing in a single frame, or applicable to window drawing in a plurality of adjacent frames. For example, in a scenario in which a stacking relationship between the windows does not change, a step before the first drawing instruction for the second region is obtained may be implemented within time of a first frame, and obtaining the first drawing instruction for the second region and a subsequent step may be implemented within time of a second frame. The time of the first frame and the time of the second frame, for example, 8.33 ms or 16.67 ms, may be used as an implementation periodicity of the technical solution. At the first frame, drawing is performed and the corresponding interface is displayed, but operations such as drawing a solid color box is not performed. Alternatively, one implementation periodicity may further include a third frame, and at the third frame, the foregoing technical solution may be run based on the second frame.

In some optional instances, after it is detected that a stacking relationship between the windows changes, for example, an overlapping area between the first to-be drawn window and the second to-be drawn window changes, the technical solution is performed.

In some optional instances, a central processing unit may send the second drawing instruction to a composition and display module first, and then send the first drawing instruction. When drawing on the first display interface, the composition and display module may skip the second drawing instruction and execute the first drawing instruction.

In some optional implementations of the first aspect, an area of the second region is less than or equal to an area of a region that is of the second to-be drawn window and that overlaps the first region.

In some optional implementations of the first aspect, the multi-window display processing method further includes: reporting the second region to a first drawing thread of a first application corresponding to the second to-be drawn window; and generating, by the first drawing thread of the first application, the first drawing instruction based on the second region.

In some optional instances, the composition and display module may determine whether a plurality of rectangles overlap in to-be drawn windows in the to-be drawn window set, output an occluding region and/or an occluded region of each to-be drawn window, and report the occluding region and/or the occluded region in a form of occlusion tuple information to a main thread in an application corresponding to each to-be drawn window, that is, report the occluding region and/or the occluded region to the central processing unit. Then, a drawing thread of the application corresponding to each to-be drawn window in the central processing unit may generate a drawing instruction, for example, the first drawing instruction, based on the occlusion tuple information of each to-be drawn window.

In some optional instances, one to-be drawn window may have a plurality of occluding regions, that is, some or all regions of one to-be drawn window may occlude some or all regions of each of a plurality of to-be drawn windows. One to-be drawn window may have a plurality of occluded regions, that is, some or all regions of one to-be drawn window may be occluded by some or all regions of each of a plurality of to-be drawn windows.

In some specific implementations, for a to-be drawn window 0 corresponding to an application 0, a to-be drawn window 1 corresponding to an application 1, a to-be drawn window 2 corresponding to an application 2, ..., occlusion tuple information corresponding to a to-be drawn window set may be represented by {<app0, rect0>, <app1, rect1>, <app2, rect2>, ...}. Occlusion tuple information of each to-be drawn window may be represented by <appi, recti (x, y, w, h)>, where x and y may represent coordinates of a point corresponding to an upper left corner of a rectangle corresponding to an occluding region or an occluded region, w may represent a width of the rectangle corresponding to the occluding region or the occluded region, and h may represent a height of the rectangle corresponding to the occluding region or the occluded region.

In some optional implementations of the first aspect, the skipping the second drawing instruction includes deleting the second drawing instruction, discarding the second drawing instruction, or skipping executing the second drawing instruction.

In some optional implementations of the first aspect, the native drawing instruction is used to draw a texture and/or display special effect of the second region of the second to-be drawn window.

It may be understood that the display special effect may include frosted glass special effect, transparency special effect, anti-aliasing special effect, or the like.

In some optional implementations of the first aspect, the first to-be drawn window and the second to-be drawn window belong to a same application, or the first to-be drawn window and the second to-be drawn window belong to different applications.

In some optional instances of the first aspect, a drawing mode of the first drawing instruction is a blend mode.

In some optional implementations of the first aspect, the multi-window display processing method further includes: obtaining a third region of a third to-be drawn window in the to-be drawn window set, where at least a partial region that is of the third to-be drawn window and that overlaps the second region is the third region; obtaining a third drawing instruction for the third region, where the third drawing instruction is used to draw a second solid color box in the third region; and when drawing on the first display interface, skipping a fourth drawing instruction and executing the third drawing instruction, where the fourth drawing instruction includes a native drawing instruction for the third region of the third to-be drawn window.

Based on the foregoing solution, a native drawing instruction for an occluded region is skipped, and a solid color box drawing instruction for the occluded region is executed. In other words, simple drawing is performed in an occluded window. This can reduce repeated complex drawing on pixels corresponding to the occluded region, and reduce power consumption of an electronic device based on a feature that drawing of a solid color box consumes less power than drawing of a texture.

It may be understood that the third to-be drawn window may be located below the second to-be drawn window and below the first to-be drawn window. In other words, the first to-be drawn window may be an occluding window, the second to-be drawn window may be an occluded window, the third to-be drawn window may also be an occluded window, the first region may be an occluding region, the second region may be an occluded region, and the third region may also be an occluded region.

In some optional instances, the second solid color box is not a hollow box, but an entire region. Executing the fifth drawing instruction may be drawing in the third region by using a same RGB value.

In some optional instances, a central processing unit may send the fourth drawing instruction to a composition and display module first, and then send the third drawing instruction. When drawing on the first display interface, the composition and display module may skip the fourth drawing instruction and execute the third drawing instruction.

According to a second aspect, an embodiment of this application provides a multi-window display processing method, applied to an electronic device. The method includes: obtaining a to-be drawn window set corresponding to a first display interface, where the to-be drawn window set includes a first to-be drawn rounded-corner window and a second to-be drawn rounded-corner window that partially overlap; obtaining a first part of the first to-be drawn rounded-corner window in the to-be drawn window set, where at least a partial region of the first part of the first to-be drawn rounded-corner window overlaps a first region of the second to-be drawn rounded-corner window; obtaining a first drawing instruction for the first part of the first to-be drawn rounded-corner window, where the first drawing instruction includes a native drawing instruction for the first part; and when drawing on the first display interface, skipping a second drawing instruction and executing the first drawing instruction, where the second drawing instruction includes a native drawing instruction for the first region of the second to-be drawn rounded-corner window.

In some optional instances of the second aspect, the first part of the first to-be drawn rounded-corner window is a part corresponding to an inscribed rectangle in the first to-be drawn rounded-corner window.

In some optional instances of the second aspect, the skipping the second drawing instruction includes deleting the second drawing instruction, discarding the second drawing instruction, or skipping executing the second drawing instruction.

In some optional instances of the second aspect, the native drawing instruction is used to draw a texture and/or display special effect of the first region of the second to-be drawn rounded-corner window.

It may be understood that the display special effect may include frosted glass special effect, transparency special effect, anti-aliasing special effect, or the like.

In some optional instances of the first aspect, a drawing mode of the first drawing instruction is a blend mode.

In some optional instances of the second aspect, the first to-be drawn rounded-corner window and the second to-be drawn rounded-corner window belong to a same application, or the first to-be drawn rounded-corner window and the second to-be drawn rounded-corner window belong to different applications.

In some optional instances of the second aspect, the multi-window display processing method further includes: obtaining a second region of a third to-be drawn rounded-corner window in the to-be drawn window set, where a partial region that is in the third to-be drawn rounded-corner window and that overlaps the first region is the second region; obtaining a third drawing instruction for the second region, where the third drawing instruction includes a native drawing instruction for the second region; and when drawing on the first display interface, skipping the third drawing instruction and executing the first drawing instruction.

According to a third aspect, this application provides an electronic device, including: a memory, configured to store instructions executed by one or more processors of the electronic device; and a processor, being one of the one or more processors of the electronic device and configured to perform the multi-window display processing method mentioned in this application.

According to a fourth aspect, this application provides a readable storage medium. The readable storage medium stores instructions, and when the instructions are executed on an electronic device, the electronic device is enabled to perform the multi-window display processing method mentioned in this application.

According to a fifth aspect, an embodiment of this application provides a computer program product, including a non-volatile computer-readable storage medium. The non-volatile computer-readable storage medium includes computer program code for performing the multi-window display processing method.

### BRIEF DESCRIPTION OF DRAWINGS

FIG. 1 is a diagram of displaying a plurality of rounded-corner windows on a display interface according to some instances of this application;
FIG. 2 is a diagram of comparison among use frequencies of functions used by tablets for a plurality of rounded-corner windows according to some instances of this application;
FIG. 3 is a diagram of stacking a plurality of rounded-corner windows on a display interface according to some instances of this application;
FIG. 4 is a diagram of stacking a plurality of rounded-corner windows on a display interface according to some instances of this application;
FIG. 5 is a diagram of stacking a plurality of rounded-corner windows on a display interface according to some instances of this application;
FIG. 6 is a diagram of stacking a plurality of rounded-corner windows on a display interface according to some instances of this application;
FIG. 7 is a schematic flowchart of a multi-window display processing method according to some instances of this application;
FIG. 8 is a block diagram of a procedure of a multi-window display processing method according to some instances of this application;
FIG. 9 is a diagram of occlusion tuple information of an occluded region that is of a to-be drawn window 5 corresponding to an App5 and that is occluded by a to-be drawn window 0 corresponding to an App0 according to some instances of this application;
FIG. 10 is a diagram of drawing a solid color box in an occluded region of a to-be drawn window 5 corresponding to an App5 according to some instances of this application;
FIG. 11 is a diagram of drawing a solid color box in a to-be drawn window whose a part or all of a region occludes a part or all of a region of another to-be drawn window according to some instances of this application;
FIG. 12 is a diagram of cropping to an inscribed rectangle in a to-be drawn window whose a part or all of a region occludes a part or all of a region of another to-be drawn window according to some instances of this application;
FIG. 13 is a diagram of dividing a layer corresponding to an occluding window into five parts according to some instances of this application; and
FIG. 14 is a hardware structure of an electronic device according to some instances of this application.

### DESCRIPTION OF EMBODIMENTS

Illustrative embodiments of this application include but are not limited to a multi-window display processing method, an electronic device, and a storage medium.

It may be understood that the multi-window display processing method mentioned in embodiments of this application may be used in any large-screen electronic device that can be implemented, like a tablet, a foldable dual-screen mobile phone, a notebook computer, a desktop computer, or a personal digital assistant.

It may be understood that the multi-window display processing method mentioned in embodiments of this application is applicable to a scenario in which a plurality of windows corresponding to a plurality of applications are synchronous displayed, a scenario in which a plurality of windows corresponding to one application are synchronous displayed, and the like. In some optional instances, the multi-window display method mentioned in embodiments of this application is applied to a scenario in which a plurality of rounded-corner windows are synchronously displayed.

To clearly describe the solutions mentioned in embodiments of this application, terms used in embodiments of this application are first explained.

An operating system is software that manages hardware of an electronic device and implements functions such as resource allocation. For example, the operating system may include Android^{®}, iOS^{®}, OpenHarmony^{®}, HarmonyOS^{®}, and the like.

An interface drawing service is a system service in an operating system, and is specially for compositing layers, and transferring and delivering the layers to a display subsystem for display. For example, the interface drawing service in an Android operating system may be surface flinger, SF for short.

A display subsystem (display subsystem, DSS) is a subsystem, in an operating system, responsible for managing data in a memory and sending the data to a display for display.

A hardware composer (hardware composer, HWC) is a component for compositing layers received from an interface drawing service.

Vsync is a signal generated by display hardware of a terminal device, where the signal is used to notify upper software to perform layer drawing and composition based on the signal.

Forward pixel kill (Forward pixel kill, FPK) is a technology proposed in Mali GPUs in the ARM architecture to reduce overdraw, and can be used to perform a depth test on a pixel in an opaque primitive and cull an overdrawn pixel based on a depth.

The following describes displaying a plurality of rounded-corner windows on a display interface.

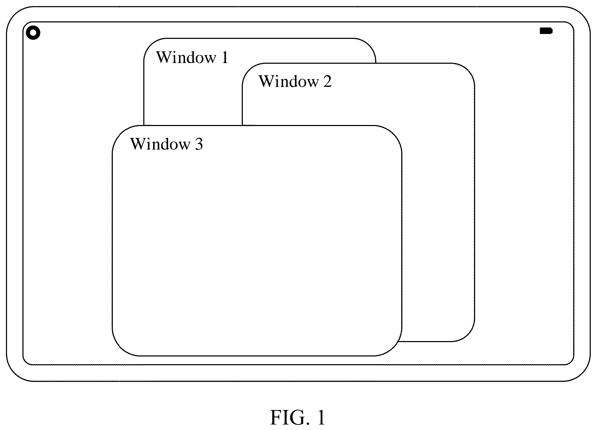

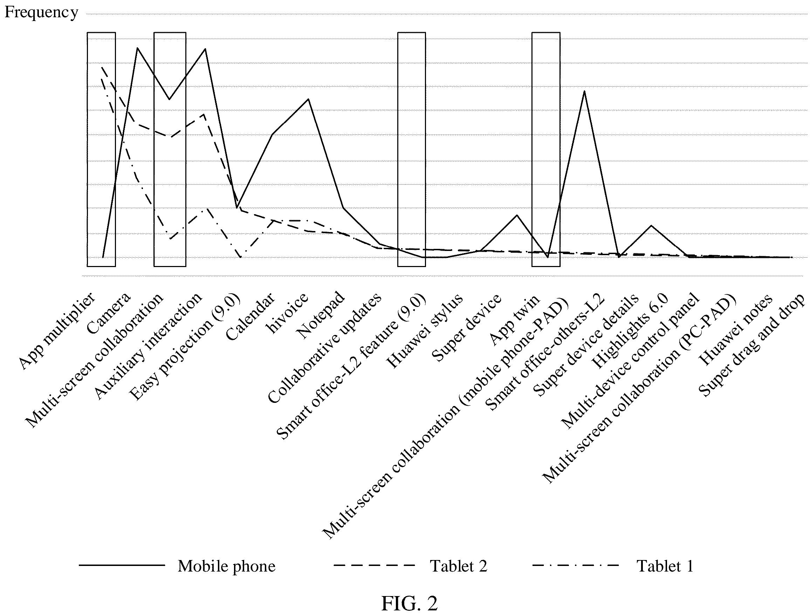

As shown in FIG. 1, a display interface of a tablet may display a window 1 corresponding to a short video application, a window 2 corresponding to a chat application, and a window 3 corresponding to a conference application, to meet requirements of various office scenarios, online learning scenarios, and entertainment scenarios. FIG. 2 is a diagram of comparison among use frequencies of functions, of tablets and a bar phone, for displaying a plurality of rounded-corner windows. As shown in FIG. 2, use frequencies of functions App multiplier on the tablets are far higher than a use frequency of a function App multiplier on the bar phone.

The following describes the multi-window display processing method mentioned in some embodiments.

In some multi-window display processing methods, on a display interface, layers corresponding to a plurality of rounded-corner windows are first drawn, and then the plurality of layers are composited via a hardware compositor. However, a large quantity of rounded-corner windows on the display interface results in heavy compositing pressure of the hardware compositor. Therefore, in some other multi-window display processing methods, a graphics processing unit is used to composite a plurality of layers.

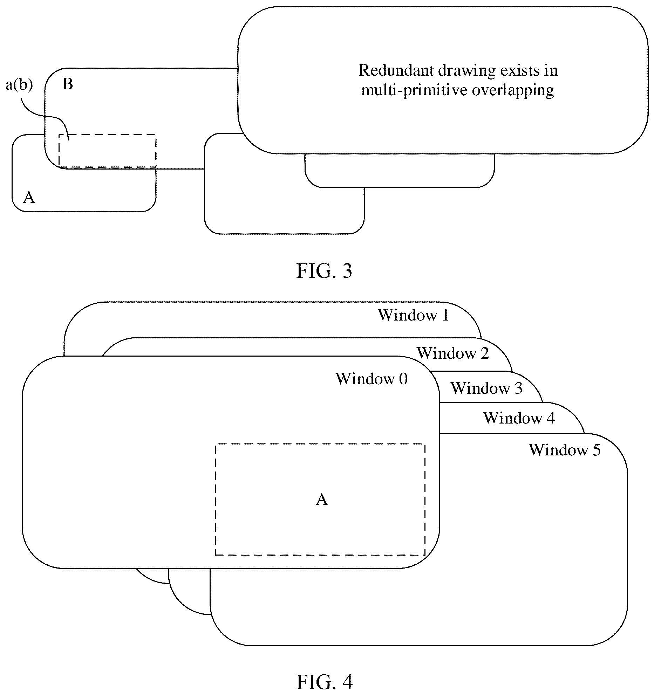

However, as shown in FIG. 3, when a plurality of rounded-corner windows are displayed on a display interface, some or all regions of some windows may be occluded by some or all regions of other windows. Therefore, when layers corresponding to the plurality of rounded-corner windows are drawn, complex drawing needs to be performed in the occluded regions of the occluded windows on some pixels on the display interface, and complex drawing needs to be performed on the occluding regions of the occluding windows on these pixels. For example, in a process of drawing on a rounded-corner window A and a rounded-corner window B in FIG. 3, complex drawing needs to be performed in an occluded region a of an occluded window A, and complex drawing needs to be performed in an occluding region b of an occluding window B. The occluded region a and the occluding region b overlap and on which a same part of pixels are located. Complex drawing is repeatedly performed on the same part of pixels (for example, a texture corresponding to the occluded region a and a texture corresponding to the occluding region b in the same part of pixels). As a result, repeated complex drawing is performed on these pixels, that is, redundant drawing exists in multi-primitive overlapping, increasing power consumption of an electronic device.

To resolve the foregoing problem, embodiments of this application provide another multi-window display processing method. For a plurality of rounded-corner windows synchronously displayed on a display interface of a large-screen electronic device (like a tablet or a foldable dual-screen mobile phone), some or all occluded regions in some or all occluded rounded-corner windows may be obtained, so that when drawing is performed in the occluded rounded-corner windows on the display interface, simple drawing is performed in the occluded regions and complex drawing may be performed in occluding regions. For example, in the process of drawing on the rounded-corner window A and the rounded-corner window B in FIG. 3, simple drawing is performed in the occluded region a of the occluded rounded-corner window A, for example, the occluded region a is drawn as a solid color box, and complex drawing is performed in the occluding region b of the occluding rounded-corner window B, for example, a texture and/or display special effect is drawn in the occluding region b. This can reduce repeated complex drawing on pixels corresponding to the occluded region, and reduce power consumption of an electronic device based on a feature that drawing of a solid color box consumes less power than drawing of a texture.

For example, for a plurality of rounded-corner windows, corresponding to a plurality of applications, synchronously displayed on a display interface of a large-screen electronic device, such as a rounded-corner window 0 corresponding to an application 0, a rounded-corner window 1 corresponding to an application 1, a rounded-corner window 2 corresponding to an application 2, a rounded-corner window 3 corresponding to an application 3, a rounded-corner window 4 corresponding to an application 4, and a rounded-corner window 5 corresponding to an application 5 in FIG. 4, an occluded region A, of the rounded-corner window 5, occluded by the rounded-corner window 0 may be obtained. When drawing is performed in the rounded-corner window 5, the occluded region A may be drawn as a solid color box.

In some specific implementations, a simple drawing instruction for the occluded region may be generated based on the occluded region of the occluded rounded-corner window. When drawing is performed on the display interface, a complex drawing instruction for the occluded region is skipped and the simple drawing instruction is executed. To be specific, a central processing unit may generate a solid color box drawing instruction, namely, the simple drawing instruction, corresponding to the occluded region A, first send the complex drawing instruction for the occluded region A to a composition and display module, and then send the simple drawing instruction for the occluded region A to the composition and display module, so that the composition and display module skips the complex drawing instruction for the occluded region A and executes the simple drawing instruction for the occluded region A.

It may be understood that for the plurality of rounded-corner windows synchronously displayed on the display interface of the large-screen electronic device (like the tablet or the foldable mobile phone), some or all occluding regions in some or all occluding rounded-corner windows may be obtained, so that complex drawing can be performed in the occluding regions on the display interface when layers corresponding to the plurality of rounded-corner windows are composited. This can ensure display effect of the occluding regions while reducing repeated complex drawing on pixels corresponding to the occluding regions.

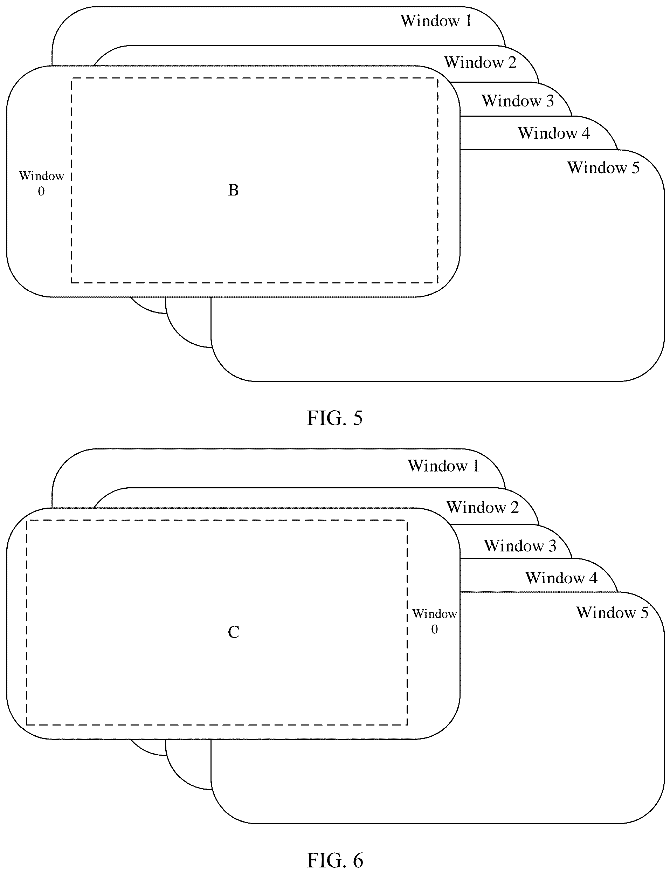

For example, for a plurality of rounded-corner windows, corresponding to a plurality of applications, synchronously displayed on a display interface of a large-screen electronic device, such as a rounded-corner window 0 corresponding to an application 0, a rounded-corner window 1 corresponding to an application 1, a rounded-corner window 2 corresponding to an application 2, a rounded-corner window 3 corresponding to an application 3, a rounded-corner window 4 corresponding to an application 4, and a rounded-corner window 5 corresponding to an application 5 in FIG. 5, an occluding region B, of the rounded-corner window 0, occluding the rounded-corner window 1, the rounded-corner window 2, the rounded corner window 3, the rounded-corner window 4, and the rounded-corner window 5 may be obtained. When composition is performed in the rounded-corner windows 0, 1, 2, 3, 4, and 5, complex drawing may be performed in the occluding region B on the display interface.

It may be understood that for the plurality of rounded-corner windows synchronously displayed on the display interface of the large-screen electronic device (like the tablet or the foldable dual-screen mobile phone), some or all regions in the some or all occluding rounded-corner windows may be obtained, so that complex drawing can be performed in the some or all regions of the occluding rounded-corner windows on the display interface when the layers corresponding to the plurality of rounded-corner windows are composited. This can ensure display effect of the occluding regions while reducing repeated complex drawing on the pixels corresponding to the occluding regions.

For example, for a plurality of rounded-corner windows synchronously displayed on a display interface of a large-screen electronic device, such as a rounded-corner window 0 corresponding to an application 0, a rounded-corner window 1 corresponding to an application 1, a rounded-corner window 2 corresponding to an application 2, a rounded-corner window 3 corresponding to an application 3, a rounded-corner window 4 corresponding to an application 4, and a rounded-corner window 5 corresponding to an application 5 in FIG. 6, a part or all of a region C (for example, including an occluding region and an unoccluding region) in the rounded-corner window 0 may be obtained. When composition is performed in the rounded-corner windows 0, 1, 2, 3, 4, and 5, complex drawing may be performed in the region C on the display interface.

In some specific implementations, a simple drawing instruction may be generated based on the occluding region of the occluding rounded-corner window, and a complex drawing instruction may be generated based on the occluding rounded-corner window. When drawing is performed on the display interface, a complex drawing instruction for the occluded region is skipped, and first the simple drawing instruction for the occluding region is executed, and then the complex instruction for the occluding region is executed. Alternatively, a complex drawing instruction for the occluded region is skipped, and the complex instruction for the occluding region is executed.

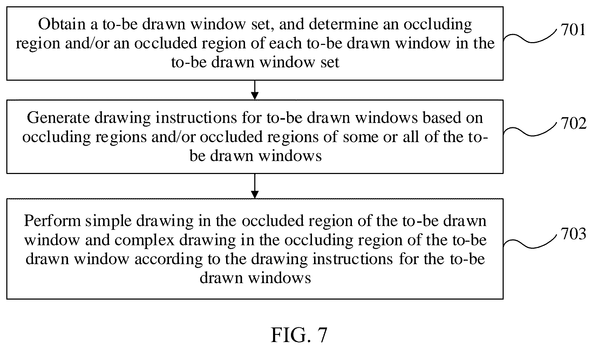

The following describes the multi-window display processing method mentioned in embodiments of this application. FIG. 7 is a schematic flowchart of a multi-window display processing method. The multi-window display processing method may be performed by an electronic device. As shown in FIG. 7, the multi-window display processing method may include the following steps.

701: Obtain a to-be drawn window set, and determine an occluding region and/or an occluded region of each to-be drawn window in the to-be drawn window set.

It may be understood that the to-be drawn window set may include a plurality of windows corresponding to a plurality of applications, or may include a plurality of windows corresponding to one application. The window may be a rounded-corner window. After the to-be drawn window set is obtained, occlusion region recognition and occlusion tuple information transfer may be performed on each to-be drawn window in the to-be drawn window set. Occlusion tuple information may include coordinates of a point corresponding to an upper left corner of a rectangle corresponding to the occluding region or the occluded region, a width of the rectangle, and a height of the rectangle.

In some optional instances, when the electronic device pre-displays the plurality of windows, an HWC in the electronic device may generate a Vsync signal and upload the signal to upper software surface flinger; and surface flinger may obtain the to-be drawn window set, determine whether a plurality of rectangles overlap in to-be drawn windows in the to-be drawn window set, output the occluding region and/or the occluded region of each to-be drawn window, and report the occluding region and/or the occluded region in a form of occlusion tuple information together with the Vsync signal to a main thread in an application corresponding to each to-be drawn window, that is, report the occluding region and/or the occluded region together with the Vsync signal to a central processing unit.

In some optional instances, one to-be drawn window may have a plurality of occluding regions, that is, some or all regions of one to-be drawn window may occlude some or all regions of each of a plurality of to-be drawn windows. One to-be drawn window may have a plurality of occluded regions, that is, some or all regions of one to-be drawn window may be occluded by some or all regions of each of a plurality of to-be drawn windows.

In some optional instances, the occluding regions and the occluded regions of the to-be drawn windows in the to-be drawn window set may be represented in the form of occlusion tuple information. For example, for a to-be drawn window 0 corresponding to an application 0, a to-be drawn window 1 corresponding to an application 1, a to-be drawn window 2 corresponding to an application 2, ..., occlusion tuple information corresponding to a to-be drawn window set may be represented by {<app0, rect0>, <app1, rect1>, <app2, rect2>, ...}. Occlusion tuple information of each to-be drawn window may be represented by <appi, recti (x, y, w, h)>, where x and y may represent coordinates of a point corresponding to an upper left corner of a rectangle corresponding to an occluding region or an occluded region, w may represent a width of the rectangle corresponding to the occluding region or the occluded region, and h may represent a height of the rectangle corresponding to the occluding region or the occluded region.

In some optional instances, because one to-be drawn window may have a plurality of occluding regions and a plurality of occluded regions, occlusion information recti (x, y, w, h) in the occlusion tuple information of each to-be drawn window may also include recti₁ (x, y, w, h), recti₂ (x, y, w, h), ..., where recti₁ (x, y, w, h) may represent one occluded region, and recti₂ (x, y, w, h) may represent another occluded region; and recti₁ (x, y, w, h) may also represent an occluded region, and recti₂ (x, y, w, h) may represent an occluding region. A specific form of the occlusion tuple information is not specifically limited in embodiments of this application.

702: Generate drawing instructions for the to-be drawn windows based on occluding regions and/or occluded regions of some or all of the to-be drawn windows.

It may be understood that after obtaining occlusion tuple information corresponding to the to-be drawn window set, the central processing unit may perform occlusion culling processing in the applications, and generate, before rendering threads perform drawing, that is, before the drawing instructions are submitted, solid color box drawing instructions for the occluded regions of the to-be drawn windows. The solid color box drawing instruction for the occluded region instructs to draw a solid color box. The solid color box is not a hollow box, but an entire region. Executing the solid color box drawing instruction may be drawing in the occluded region by using a same RGB value.

In some specific implementations, the main thread in the application corresponding to each to-be drawn window in the to-be drawn window set may record, after receiving the occlusion tuple information of the to-be drawn window, the occlusion tuple information, generate, for the occluded region of the to-be drawn window based on the occlusion tuple information, the solid color box drawing instruction for the occluded region, first deliver, to a graphics processing unit (graphics processing unit, GPU), a complex drawing instruction (for example, an instruction for drawing a texture and/or display special effect in the occluded region) corresponding to the occluded region, and then deliver, to the GPU, the solid color box drawing instruction for the occluded region. The display special effect may include frosted glass special effect, transparency special effect, anti-aliasing special effect, or the like.

In some optional instances, a complex drawing instruction for an unoccluded to-be drawn window may be generated, so that complex information like a texture and/or display special effect can be drawn in the unoccluded to-be drawn window on the display interface according to the complex drawing instruction.

In some other optional instances, a solid color box drawing instruction for the occluding region may be generated based on the occluding region of the to-be drawn window, so that a solid color box can be first drawn on the display interface according to the solid color box drawing instruction for the occluding region, and then drawing is performed in the occluding window to cover the solid color box.

In some other optional instances, a drawing instruction for drawing a maximum inscribed rectangle in the occluding region in a blend mode and a drawing instruction for drawing a rounded-corner in the occluding region in a transparency mode may be generated based on the occluding region of the to-be drawn window.

In some optional instances, for a to-be drawn window 1 corresponding to an application 1, a to-be drawn window 2 corresponding to an application 2, a to-be drawn window 3 corresponding to an application 3, a to-be drawn window 4 corresponding to an application 4, a to-be drawn window 5 corresponding to an application 5, and a to-be drawn window 0 corresponding to an application 0 that are sequentially stacked from bottom to top, solid color box drawing instructions for occluded regions may be generated based on the occluded regions of the to-be drawn windows 1, 2, 3, 4, and 5, or solid color box drawing instructions for occluded regions may be generated based on the occluded regions of the to-be drawn windows 1, 3, and 5.

703: Perform simple drawing in the occluded region of the to-be drawn window and complex drawing in the occluding region of the to-be drawn window according to the drawing instructions for the to-be drawn windows.

It may be understood that after the drawing instructions for the to-be drawn windows are received, when drawing is performed in the to-be drawn window whose a part or all of a region is occluded by a part or all of a region of another to-be drawn window, the graphics processing unit (graphics processing unit, GPU) may execute the solid color box drawing instruction for the occluded region, and skip executing the complex drawing instruction for the occluded region, that is, perform simple drawing in the occluded region, and draw the occluded region as the solid color box.

It may be understood that when layers corresponding to the to-be drawn windows in the to-be drawn window set are composited, complex drawing may be performed, based on a stacking sequence of the to-be drawn windows in the to-be drawn window set, in the to-be drawn window whose a part or all of a region occludes a part or all of a region of another to-be drawn window, to be specific, drawing textures or display special effect of a part or all of an occluding region of the to-be drawn window (namely, an occluding window) having the part or all of the occluding region, the part of the region (including an occluding region and an unoccluding region) or all of the region (including an occluding region and an unoccluding region).

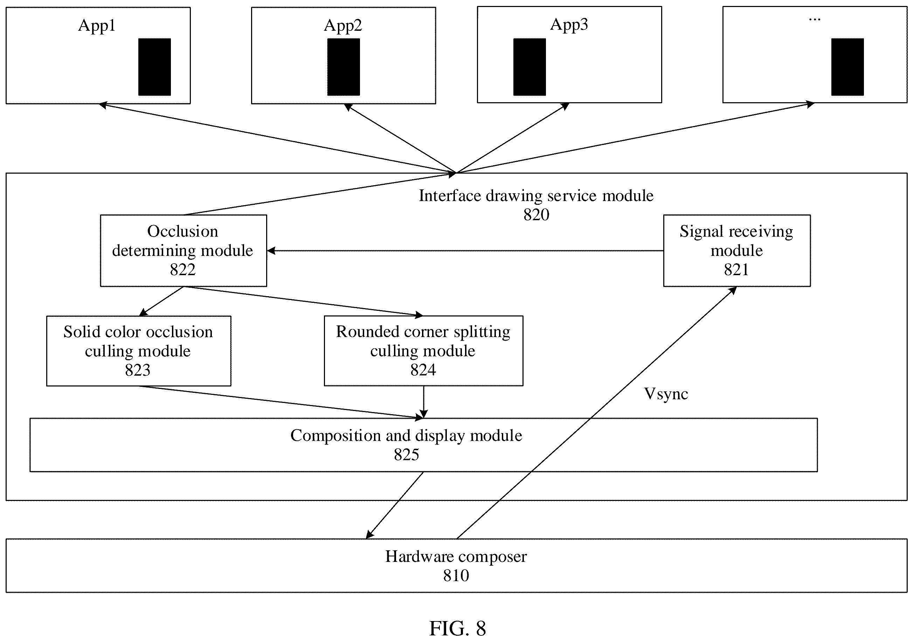

The following describes, with reference to an architecture of the electronic device, the multi-window display processing method mentioned above. FIG. 8 is a block diagram of the architecture of the electronic device. As shown in FIG. 8, the electronic device may include a hardware composer 810 and an interface drawing service 820. The interface drawing service 820 may include a signal receiving module 821, an occlusion determining module 822, a solid color occlusion culling module 823, a rounded corner splitting culling module 824, and a composition and display module 825.

The multi-window display processing method may include the following steps.

When the electronic device pre-displays a plurality of windows, the hardware composer 810 in the electronic device may generate a Vsync signal, and upload the signal to the signal receiving module 821 in upper software interface drawing service 820.

When the signal receiving module 821 receives the Vsync signal, the interface drawing service 820 may obtain a to-be drawn window set, for example, obtain a to-be drawn window 1 corresponding to App1, a to-be drawn window 2 corresponding to App2, a to-be drawn window 3 corresponding to App3, .... The signal receiving module 821 in the interface drawing service 820 may further send a trigger signal to the occlusion determining module 822 in the interface drawing service 820 after receiving the Vsync signal uploaded by the hardware composer 810.

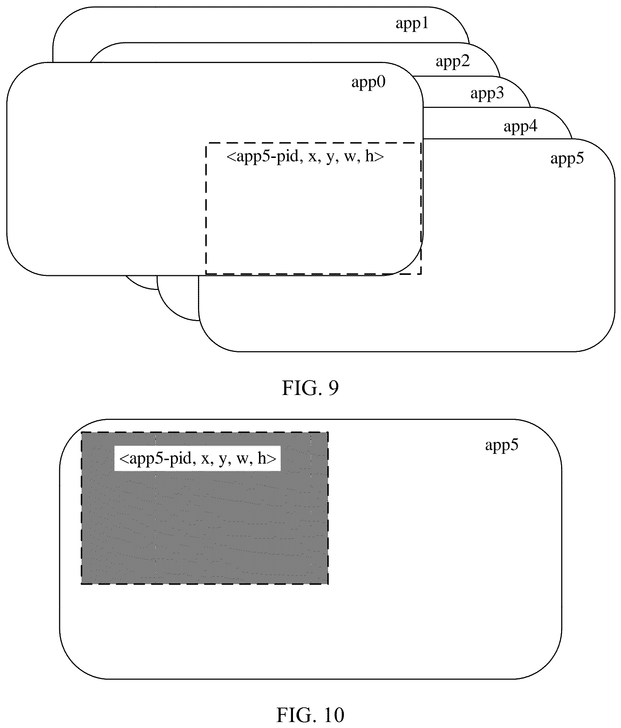

After receiving the trigger signal sent by the occlusion determining module 822, the occlusion determining module 822 in the interface drawing service 820 may determine whether a plurality of rectangles overlap in the to-be drawn windows in the to-be drawn window set, output an occluding region and/or an occluded region of each to-be drawn window, and report occlusion tuple information {<app1, rect1>, <app2, rect2>, ...} together with the Vsync signal to a main thread in an application corresponding to each to-be drawn window. For example, occlusion tuple information <app5-pid, x, y, w, h> of an occluded region, of a to-be drawn window 5 corresponding to an App5 in FIG. 9, occluded by a to-be drawn window 0 corresponding to an App0 may be reported to a main thread in the App5.

After receiving the occlusion tuple information corresponding to the to-be drawn window, the main thread in the application may record the occlusion tuple information, and generate, before a rendering thread draws elements such as a control/primitive in the to-be drawn window, that is, before a drawing instruction for the to-be drawn window is submitted, a solid color box drawing instruction for drawing, as a solid color box, the occluded region of the to-be drawn window. For example, as shown in FIG. 10, a solid color box drawing instruction for drawing, as a solid color box, the occluded region of the to-be drawn window 5 corresponding to the App5 may be generated. Then, a complex drawing instruction for the to-be drawn window may be first submitted to the interface drawing service 820, and then the solid color box drawing instruction for the occluded region (namely, the instruction for drawing the occluded region as the solid color box) may be submitted to the interface drawing service 820.

The occlusion determining module 822 in the interface drawing service 820 may determine the occluding region of each to-be drawn window in the to-be drawn window set, and then transfer the occluding region of the to-be drawn window to the solid color occlusion culling module 823 in the interface drawing service 820, and transfer, to the solid color occlusion culling module 823 in the interface drawing service 820, an occlusion culling drawing instruction for the occluding region of the to-be drawn window, or transfer, to the rounded corner splitting culling module 824, an occlusion culling drawing instruction for the occluding region of the to-be drawn window. When drawing in a to-be drawn window whose a part or all of regions are occluded by a part or all of regions of another to-be drawn window, the solid color occlusion culling module 823 may draw the occluded region as a solid color box. When drawing in a to-be drawn window whose a part or all of regions occlude a part or all of regions of another to-be drawn window, the solid color occlusion culling module 823 may draw a region corresponding to the occluding region as a solid color box. When drawing in a to-be drawn window whose a part or all of regions occlude a part or all of regions of another to-be drawn window, the rounded corner splitting culling module 824 may classify the occluding region into a plurality of regions based on a maximum inscribed rectangle in the occluding region, draw, based on a texture drawing mode, a texture corresponding to the maximum inscribed rectangle, and perform drawing in regions corresponding to four rounded corners in the occluding region based on a transparency mode. Then, a layer corresponding to each to-be drawn window in the to-be drawn window set may be transferred to the composition and display module 825 in the interface drawing service 820.

The composition and display module 825 in the interface drawing service 820 may perform composition on each to-be drawn window based on a sequence of stacking layers corresponding to the to-be drawn windows in the to-be drawn window set, and deliver composited layers to a display interface for display.

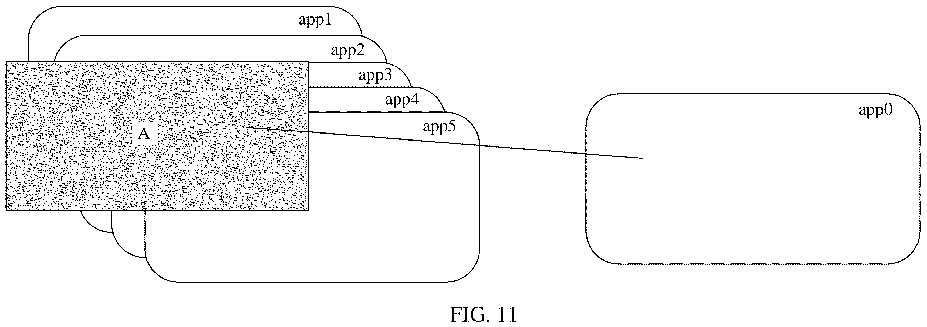

As shown in FIG. 11, in some optional instances, an operation of drawing the solid color box may be performed in a to-be drawn window whose a part or all of a region occludes a part or all of a region of another to-be drawn window, and then a layer corresponding to the occluding window is drawn to cover the solid color box. In other words, the pure color box is first drawn in a region corresponding to the occluding region on a lower layer to which a layer corresponding to the occluding window is to be set, and then the layer corresponding to the occluding window is set on the solid color box corresponding to the occluding region on the lower layer. Specifically, the solid color box shown in A in FIG. 11 may be first drawn on a layer corresponding to the app5, and then a layer corresponding to the app0 covers the solid color box A.

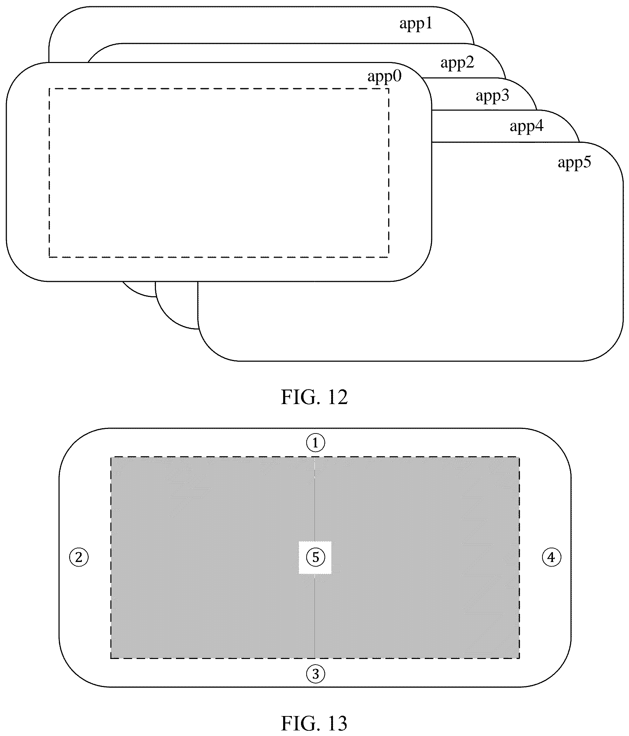

As shown in FIG. 12, in some other optional instances, an operation of cropping to an inscribed rectangle, for example, cropping to a maximum inscribed rectangle, may be performed in a to-be drawn window whose a part or all of a region occludes a part or all of a region of another to-be drawn window, and a drawing mode of the inscribed rectangle is set to a blend mode (BlendMode=kSrc), so that for the maximum inscribed rectangle, when a layer corresponding to the occluding window is drawn, texture drawing is performed on a part corresponding to the maximum inscribed rectangle, and transparency drawing is performed on a part corresponding to rounded corners.

For example, as shown in FIG. 13, the layer corresponding to the occluding window may be divided into a first part and a second part. The first part may be the part corresponding to the maximum inscribed rectangle in the occluding window, for example, a shadow region shown by ⑤ in FIG. 13. The second part may be the remaining parts other than the part corresponding to the maximum inscribed rectangle in the occluding window, for example, non-shadow regions shown by ①, ②, ③, and ④ in FIG. 13. The four parts ① to ④ are drawn in an original mode (the four rounded corners need to be drawn as transparent parts, and therefore FPK is not enabled), a drawing mode of the part ⑤ may be set to a blend mode (BlendMode=kSrc) and therefore FPK can be enabled, and texture drawing is performed on pixels in the part ⑤, to be specific, display information of the pixels in the part ⑤ is set to texture data corresponding to the region ⑤.

In some optional instances, a composition mode of the layers corresponding to the to-be drawn windows in the to-be drawn window set may be viewed by using dumpsys SurfaceFlinger. When there are a large quantity of layers, most layers are in a client composition manner, that is, the layers are composed by using the GPU. In addition, a layer corresponding to a topmost to-be drawn window is also composed by using the GPU. Therefore, the layer corresponding to the topmost to-be drawn window may be processed in the manner shown in FIG. 13. This can reduce repeated complex drawing on pixels corresponding to the occluding region, and reduce power consumption of the electronic device.

In some optional instances, the multi-window display method is applied to a scenario in which windows corresponding to a plurality of applications are synchronously displayed.

For example, in a scenario in which a plurality of windows that correspond to a chat application and a short video application are simultaneously displayed, after a user opens the chat application, a window corresponding to the chat application may be displayed on the display interface of the electronic device, and after the user opens the short video application, a window corresponding to the short video application may be displayed on the display interface of the electronic device. The window corresponding to the short video application may partially occlude the window corresponding to the chat application.

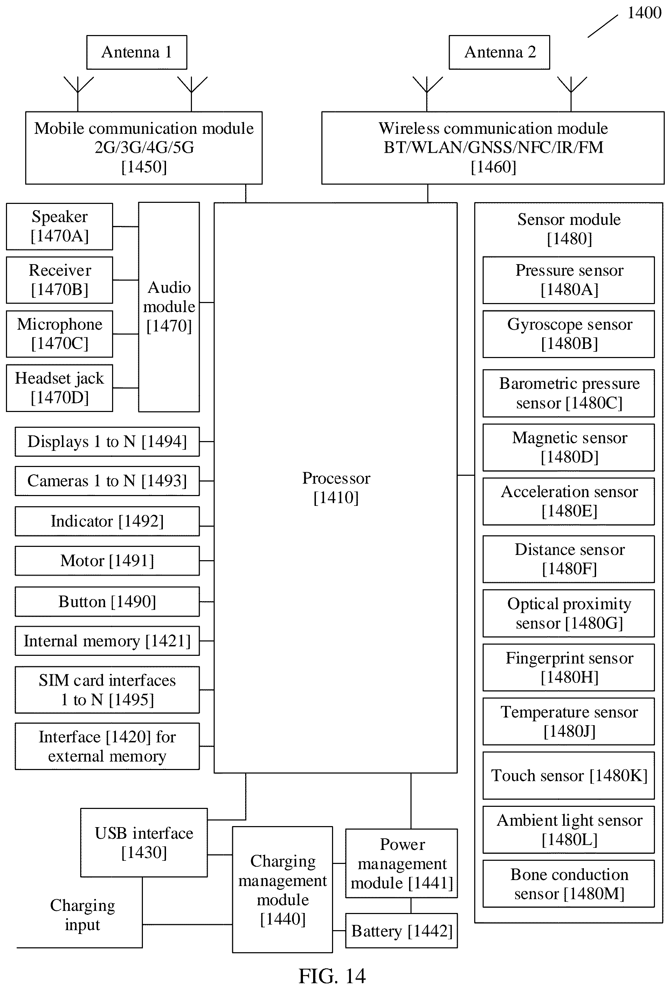

The following describes a hardware structure of the electronic device. As shown in FIG. 14, the electronic device 1400 may include a processor 1410, an interface 1420 for external memory, an internal memory 1421, a universal serial bus (universal serial bus, USB) interface 1430, a charging management module 1440, a power management module 1441, a battery 1442, an antenna 1, an antenna 2, a mobile communication module 1450, a wireless communication module 1460, an audio module 1470, a speaker 1470A, a receiver 1470B, a microphone 1470C, a headset jack 1470D, a sensor module 1480, a button 1490, a motor 1491, an indicator 1492, a camera 1493, a display 1494, a subscriber identity module (subscriber identity module, SIM) card interface 1495, and the like. The sensor module 1480 may include a pressure sensor 1480A, a gyroscope sensor 1480B, a barometric pressure sensor 1480C, a magnetic sensor 1480D, an acceleration sensor 1480E, a distance sensor 1480F, an optical proximity sensor 1480G, a fingerprint sensor 1480H, a temperature sensor 1480J, a touch sensor 1480K, an ambient light sensor 1480L, a bone conduction sensor 1480M, and the like.

It may be understood that the structure shown in embodiments of the present invention does not constitute a specific limitation on the electronic device. In some other embodiments of this application, the electronic device 1400 may include more or fewer components than those shown in the figure, or some components may be combined, or some components may be split, or different component arrangements may be used. The components shown in the figure may be implemented by hardware, software, or a combination of software and hardware.

The processor 1410 may include one or more processing units. For example, the processor 1410 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. For example, the processor 1410 may execute the multi-window display processing method mentioned in embodiments of this application.

The controller may generate an operation control signal based on an instruction operation code and a time sequence signal, to complete control of instruction reading and instruction execution.

A memory may be disposed in the processor 1410, and is configured to store instructions and data. In some embodiments, the memory in the processor 1410 is a cache. The memory may store instructions or data that has been used or is cyclically used by the processor 1410. If the processor 1410 needs to use the instructions or the data again, the processor may directly invoke the instructions or the data from the memory. This avoids repeated access, reduces waiting time of the processor 1410, and improves system efficiency. For example, the memory may store the multi-window display processing method mentioned in embodiments of this application.

The electronic device 1400 implements a display function via the GPU, the display 1494, the application processor, and the like. The GPU is a microprocessor for image processing, and is connected to the display 1494 and the application processor. The GPU is configured to: perform mathematical and geometric computation, and render an image. The processor 1410 may include one or more GPUs that execute program instructions to generate or change displayed information.

The display 1494 is configured to display an image, a video, or the like. The display 1494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The foregoing describes the possible hardware structure of the electronic device. It may be understood that the structure shown in embodiments of this application does not constitute a specific limitation on the electronic device. In some other embodiments of this application, the electronic device may include more or fewer components than those shown in the figure, or some components may be combined, or some components may be split, or different component arrangements may be used. The components shown in the figure may be implemented by hardware, software, or a combination of software and hardware.

In the accompanying drawings, some structural or method features may be shown in a particular arrangement and/or order. However, it should be understood that such a particular arrangement and/or order may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code can be applied to input instructions to perform the functions described in this application and generate output information. The output information can be applied to one or more output devices in a known manner. For a purpose of this application, a processing system includes any system having a processor like a digital signal processor (DSP), a microcontroller, an application-specific integrated circuit, or a microprocessor.

The program code may be implemented in a high-level programming language or an object-oriented programming language to communicate with the processing system. The program code may also be implemented by using an assembly language or a machine language when required. The mechanisms described in this application are actually not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or by another computer-readable medium. Therefore, the machine-readable medium may include any mechanism for storing or transmitting information in a machine (for example, a computer)-readable form, including but not limited to a floppy disk, a compact disc, an optical disc, read-only memories (CD-ROMs), a magnetic optical disc, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium appropriate for storing or transmitting electronic instructions or information in a machine (for example, a computer)-readable form.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and specification of this patent, relational terms such as first and second are merely used to distinguish one entity or operation from another, and do not necessarily require or imply any such actual relationship or order between these entities or operations. Moreover, the term "include", "including", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some embodiments of this application, a person of ordinary skill in the art should understand that various changes may be made to this application in terms of form and details without departing from the scope of this application.

## Claims

1. A multi-window display processing method, applied to an electronic device, and comprising:
obtaining a to-be drawn window set corresponding to a first display interface, wherein the to-be drawn window set comprises a first to-be drawn window and a second to-be drawn window that partially overlap;
obtaining a first region of the first to-be drawn window in the to-be drawn window set, wherein at least a partial region that is of the second to-be drawn window and that overlaps the first region is a second region;
obtaining a first drawing instruction for the second region, wherein the first drawing instruction is used to draw a first solid color box in the second region; and
when drawing on the first display interface, skipping a second drawing instruction and executing the first drawing instruction, wherein the second drawing instruction comprises a native drawing instruction for the second region of the second to-be drawn window.

2. The method according to claim 1, wherein an area of the second region is less than or equal to an area of a region that is of the second to-be drawn window and that overlaps the first region.

3. The method according to claim 1, further comprising:
reporting the second region to a first drawing thread of a first application corresponding to the second to-be drawn window; and
generating, by the first drawing thread of the first application, the first drawing instruction based on the second region.

4. The method according to claim 1, wherein the skipping the second drawing instruction comprises deleting the second drawing instruction, discarding the second drawing instruction, or skipping executing the second drawing instruction.

5. The method according to claim 1, wherein the native drawing instruction is used to draw a texture and/or display special effect of the second region of the second to-be drawn window.

6. The method according to claim 1, wherein the first to-be drawn window and the second to-be drawn window belong to a same application, or
the first to-be drawn window and the second to-be drawn window belong to different applications.

7. The method according to claim 1, wherein a drawing mode of the first drawing instruction is a blend mode.

8. The method according to claim 1, further comprising:
obtaining a third region of a third to-be drawn window in the to-be drawn window set, wherein at least a partial region that is of the third to-be drawn window and that overlaps the second region is the third region;
obtaining a third drawing instruction for the third region, wherein the third drawing instruction is used to draw a second solid color box in the third region; and
when drawing on the first display interface, skipping a fourth drawing instruction and executing the third drawing instruction, wherein the fourth drawing instruction comprises a native drawing instruction for the third region of the third to-be drawn window.

9. A multi-window display processing method, applied to an electronic device, and comprising:
obtaining a to-be drawn window set corresponding to a first display interface, wherein the to-be drawn window set comprises a first to-be drawn rounded-corner window and a second to-be drawn rounded-corner window that partially overlap;
obtaining a first part of the first to-be drawn rounded-corner window in the to-be drawn window set, wherein at least a partial region of the first part of the first to-be drawn rounded-corner window overlaps a first region of the second to-be drawn rounded-corner window;
obtaining a first drawing instruction for the first part of the first to-be drawn rounded-corner window, wherein the first drawing instruction comprises a native drawing instruction for the first part; and
when drawing on the first display interface, skipping a second drawing instruction and executing the first drawing instruction, wherein the second drawing instruction comprises a native drawing instruction for the first region of the second to-be drawn rounded-corner window.

10. The method according to claim 9, wherein the first part of the first to-be drawn rounded-corner window is a part corresponding to an inscribed rectangle in the first to-be drawn rounded-corner window.

11. The method according to claim 9, wherein the skipping the second drawing instruction comprises deleting the second drawing instruction, discarding the second drawing instruction, or skipping executing the second drawing instruction.

12. The method according to claim 9, wherein the native drawing instruction is used to draw a texture and/or display special effect of the first region of the second to-be drawn rounded-corner window.

13. The method according to claim 9, wherein a drawing mode of the first drawing instruction is a blend mode.

14. The method according to claim 9, wherein the first to-be drawn rounded-corner window and the second to-be drawn rounded-corner window belong to a same application, or
the first to-be drawn rounded-corner window and the second to-be drawn rounded-corner window belong to different applications.

15. The method according to claim 9, further comprising:
obtaining a second region of a third to-be drawn rounded-corner window in the to-be drawn window set, wherein at least a partial region that is in the third to-be drawn rounded-corner window and that overlaps the first region is the second region;
obtaining a third drawing instruction for the second region, wherein the third drawing instruction comprises a native drawing instruction for the second region; and
when drawing on the first display interface, skipping the third drawing instruction and executing the first drawing instruction.

16. An electronic device, comprising: a memory, configured to store instructions executed by one or more processors of the electronic device; and a processor, being one of the one or more processors of the electronic device and configured to perform the multi-window display processing method according to any one of claims 1 to 15.

17. A readable storage medium, wherein the readable storage medium stores instructions, and when the instructions are executed on an electronic device, the electronic device is enabled to perform the multi-window display processing method according to any one of claims 1 to 15.
